# EUROPÄISCHE PATENTANMELDUNG

(11) **EP 2 690 410 A2**
(43) Veröffentlichungstag der Anmeldung: **29.01.2014**
(21) Anmeldenummer: 13175117.4
(22) Anmeldetag: 04.07.2013
(51) Int. Cl.: G01D 1/10, G08C 13/00, H04Q 9/00

(54) **Übertragungsvorrichtung und Sensor-System**

(30) Priorität: 25.07.2012 DE 102012213092
(71) Anmelder: Fraunhofer-Gesellschaft zur Förderung der angewandten Forschung e.V., 80686 München (DE)
(72) Erfinder: Völker, Matthias, 90768 Fürth (DE); Hauer, Johann, 91058 Erlangen (DE)
(74) Vertreter: Zimmermann, Tankred Klaus

(57) **Zusammenfassung**

Eine Übertragungsvorrichtung für zwei elektrische Impuls-Messsignale umfasst einen ersten Messsignaleingang, einen zweiten Messsignaleingang, einen differentiellen Messsignalausgang und einen Signalumsetzer. Der erste Messsignaleingang dient zum Empfangen eines ersten Eintakt-Messsignals, der zweite Messsignaleingang zum Empfangen eines zweiten Eintakt-Messsignals, wobei der Signalumsetzer dazu ausgebildet ist, bei Empfang eines ersten der Eintakt-Messsignale entweder das erste Eintakt-Messsignal oder das zweite Eintakt-Messsignal in ein kombiniertes differentielles Messsignal zu wandeln und an dem differentiellen Messsignalausgang bereitzustellen. Hierbei umfasst das differentielle Messsignal einen ersten dem ersten Eintakt-Messsignal zuordenbaren differentiellen Anteil und einen zweiten dem zweiten Eintakt-Messsignal zuordenbaren differentiellen Anteil.

## Beschreibung

Ausführungsbeispiele der vorliegenden Erfindung beziehen sich auf eine Übertragungsvorrichtung für zwei elektrische Impuls-Messsignale sowie auf ein Sensor-System.

Ein Sensor-System kann ein Photodiodenarray bzw. ein Pixelarray, z.B. eines Positronen-Emissions-Tomographie-System zur Gamma-Strahlen-Erfassung in der Medizintechnik, sein. Jedes Pixel des Pixelarrays bzw. allgemein jedes Sensorelement gibt bei Registrieren einer Messgröße, z.B. infolge eines Lichteinfalls oder Lichtpulses, ein Messsignal aus. Bei derartigen Anwendungen ist das Messsignal typischerweise ein sogenanntes Eintakt-Messsignal. Unter einem Eintakt-Messsignal wird ein elektrisches Signal, wie z.B. ein Stromsignal, verstanden, das auf ein festes Referenzsignal, wie z.B. ein Massesignal (welches an einen Masseleiter anliegt), bezogen ist und mittels eines einzelnen Signalleiters übertragen werden kann.

Eintakt-Messsignale führen bei einer hohen Integrationsdichte von integrierten Schaltungen häufig zu Übersprechen zwischen den einzelnen Schaltungsblöcken und damit zwischen den einzelnen Kanälen, insbesondere dann, wenn analoge und digitale Funktionen gleichzeitig realisiert sind. Bei der analogen Schaltungstechnik kann ein derartiges Übersprechen durch Nutzung von differentiellen Messsignalen reduziert bzw. vermieden werden. Ein differentielles Messsignal überträgt die jeweilige Signalinformation über die gemessene Messgröße unter Nutzung von zwei Signalleitern, wobei das eigentliche Signal einer Spannungsdifferenz oder Stromdifferenz zwischen einem ersten Signalanteil (übertragen über den ersten Signalleiter) und einem zweiten Signalanteil (übertragen über den zweiten Signalleiter) ist. Hierbei hat es keine Auswirkungen auf die Spannungsdifferenz (Signalinformation), wenn beispielsweise der Mittelwert des ersten und zweiten Signalanteils aufgrund einer externen Störung variiert, was das differentielle Messsignal sehr störungsunanfällig macht. Um diese Vorteile bei den oben angesprochenen Sensoranwendungen zu nutzen, wird häufig das Eintakt-Messsignal des einzelnen Sensorelements in ein differentielles Messsignal gewandelt. Für eine derartige Umwandlung gibt es unterschiedliche Schaltungen bzw. Bauelemente, wie z.B. einen Eintakt-nach-differentiell-Umsetzer (explizite Schaltung). Alternativ kann auch ein differentieller Verstärker hierfür genutzt werden, der typischerweise mindestens zwei Eingangstransistoren aufweist, die bei der Signalverarbeitung zum Rauschen beitragen und den Gesamtenergiebedarf erhöhen. Deshalb ist es Aufgabe der vorliegenden Erfindung, ein Konzept zur Signalübertragung zu schaffen, welches einen verbesserten Kompromiss aus Störungsunempfindlichkeit, Energieverbrauch, Platzbedarf und Herstellungskosten darstellt.

Die Aufgabe der vorliegenden Erfindung wird durch eine Übertragungsvorrichtung gemäß Anspruch 1, durch ein Sensor-System gemäß Anspruch 14, durch eine Verwendung eines Eintakt-nach-differenziell-Wandlers gemäß Anspruch 16 und durch ein Verfahren gemäß Anspruch 17 gelöst.

Ausführungsbeispiele der vorliegenden Erfindung schaffen eine Übertragungsvorrichtung für zwei elektrische Impuls-Messsignale, mit einem ersten und zweiten Messsignaleingang, einem differentiellen Messsignalausgang und einem Signalumsetzer. Der erste Messsignaleingang dient zum Empfang eines ersten Eintakt-Messsignals, während der zweite Messsignaleingang zum Empfang eines zweiten Eintakt-Messsignals dient. Der Signalumsetzer ist ausgebildet, bei Empfang eines der Eintakt-Messsignale entweder das erste Eintakt-Messsignal oder das zweite Eintakt-Messsignal in ein kombiniertes differentielles Messsignal zu wandeln und an dem differentiellen Messsignalausgang bereitzustellen, wobei das differentielle Messsignal einen ersten dem ersten Eintakt-Messsignal zuordenbaren differentiellen Anteil und einen zweiten dem zweiten Eintakt-Messsignal zuordenbaren differentiellen Anteil umfasst.

Ausführungsbeispiele der vorliegenden Erfindung basieren auf der Erkenntnis, dass bei den betrachteten Anwendungen vor allem sehr kurze Signale, z.B. Impulssignale mit einer Dauer von beispielsweise 100 ns, erfasst werden, wobei die Häufigkeit der Signalwiederholung gering ist, z.B. 6 mal pro Sekunde. Also ist die Wahrscheinlichkeit, dass zwei Eintakt-Messsignale zeitgleich übertragen werden, gering. Diese Erkenntnis nutzt die erfindungsgemäße Übertragungsvorrichtung insofern, dass sie zwei Eintakt-Messsignale von zwei Sensorelementen, die zu unterschiedlichen Zeitpunkten auftreten, als kombiniertes differentielles Messsignal überträgt, wobei in dem differentiellen Messsignal die Anteile desselben, die entweder dem ersten Eintakt-Messsignal oder dem zweiten Eintakt-Messsignal zuordenbar sind, anhand ihrer Polarität unterscheidbar sind. Also besteht der Vorteil, dass zwei Eintakt-Messsignale mit einer Übertragungsvorrichtung als störungsfreies differentielles Messsignal übertragen werden können. Durch die (serielle) Übertragung der zwei Eintakt-Messsignale über dieselbe Vorrichtung kann die Zahl der Übertragungsvorrichtungen und damit der Stromverbrauch des Sensor-Systems, z.B. auf die Hälfte, reduziert werden. Ferner werden auch die Herstellungskosten reduziert, da die Zahl an Übertragungsvorrichtungen und damit der eingesetzten elektrischen Bauelemente reduziert ist.

Entsprechend weiteren Ausführungsbeispielen wird durch die Übertragungsvorrichtung, die beispielsweise einen differentiellen Verstärker oder einen einfachen Eintakt-nach-differentiell-Umsetzer aufweist, bei unipolaren Eintakt-Messsignale eines der unipolaren Eintakt-Messsignale gegenüber dem anderen invertiert, so dass durch zwei unterschiedliche Polaritäten im differentiellen Messsignal die Zuordenbarkeit der differentiellen Anteile im differentiellen Messsignal zu den ursprünglichen Eintakt-Messsignalen erhalten bleibt.

Weitere Ausführungsbeispiele schaffen ein Sensor-System mit einer Vielzahl von Sensorelementen und mindestens zwei der oben beschriebenen Übertragungsvorrichtungen. Hierbei ist ein erstes Sensorelement mit einem ersten der zwei Messsignaleingängen der ersten Übertragungsvorrichtung und ein zweites Sensorelement mit einem ersten der zwei Messsignaleingängen der zweiten Übertragungsvorrichtung verbunden, wobei ein drittes Sensorelement, welches nicht-angrenzend an das erste Sensorelement angeordnet ist, mit einem zweiten der zwei Messsignaleingänge der ersten Übertragungsvorrichtung verbunden ist. Durch eine derartige verschachtelte Anordnung werden Effekte, wie z.B. Übersprechen von zwei benachbarten Sensorelementen, messbar.

Weitere Ausführungsbeispiele schaffen ein Verfahren zur Übertragung von zwei elektrischen Impuls-Messsignalen. Das Verfahren umfasst die Schritte des Empfangens eines ersten Eintakt-Messsignals über einen ersten Messsignaleingang, des Empfangens eines zweiten Eintakt-Messsignals über einen zweiten Messsignaleingang, des Wandelns entweder des ersten Eintakt-Messsignals oder des zweiten Eintakt-Messsignals in ein kombiniertes differentielles Messsignal und des Bereitstellens des differentiellen Messsignals an einem differentiellen Messsignalausgang. Hierbei weist das differentielle Messsignal einen ersten dem ersten Eintakt-Messsignal zuordenbaren differentiellen Anteil und einem zweiten dem zweiten Messsignal zuordenbaren differentiellen Anteil auf. Insgesamt wird bei dem beschriebenen Verfahren die Übertragungsqualität einerseits durch die Verwendung eines störungsrobusten Übertragungsverfahrens (differentielle Übertragung) und durch die Reduzierung von Störsignalen, wie z.B. Rauschen, bzw. durch die Reduzierung von Störsignal verursachenden aktiven Bauelementen, wie z.B. Transistoren, erhöht.

Ausführungsbeispiele werden nachfolgend anhand der beiliegenden Zeichnungen näher erläutert. Es zeigen:
- Fig. 1a-1d: einen Eintakt-nach-differentiell-Umsetzer und die zugehörigen Eingangs- und Ausgangsgrößen (symmetrische Signalübertragung) gemäß dem Stand der Technik;
- Fig. 2a-2b: einen differentiellen Verstärker zur Eintakt-nach-differentiell-Umsetzung und die zugehörigen Eingangs- und Ausgangsgrößen gemäß dem Stand der Technik;
- Fig. 3a-3b: ein schematisches Blockschaltbild einer Übertragungsvorrichtung und die zugehörigen Eingangs- und Ausgangsgrößen gemäß einem Ausführungsbeispiel;
- Fig. 4a: ein schematisches Blockschaltbild einer Übertragungsvorrichtung mit einem differentiellen Verstärker gemäß einem Ausführungsbeispiel;
- Fig. 4b: ein schematisches Blockschaltbild einer Übertragungsvorrichtung mit einem Eintakt-nach-differentiell-Umsetzer gemäß einem Ausführungsbeispiel; und
- Fig. 5: ein schematisches Blockschaltbild eines verschachtelten Sensor-Systems gemäß einem Ausführungsbeispiel.

Bevor nachfolgend Ausführungsbeispiele der vorliegenden Erfindung anhand der Figuren näher erläutert werden, wird darauf hingewiesen, dass gleiche oder gleichwirkende Elemente oder Strukturen mit gleichen Bezugszeichen versehen sind, so dass die Beschreibung derer austauschbar bzw. aufeinander anwendbar ist.

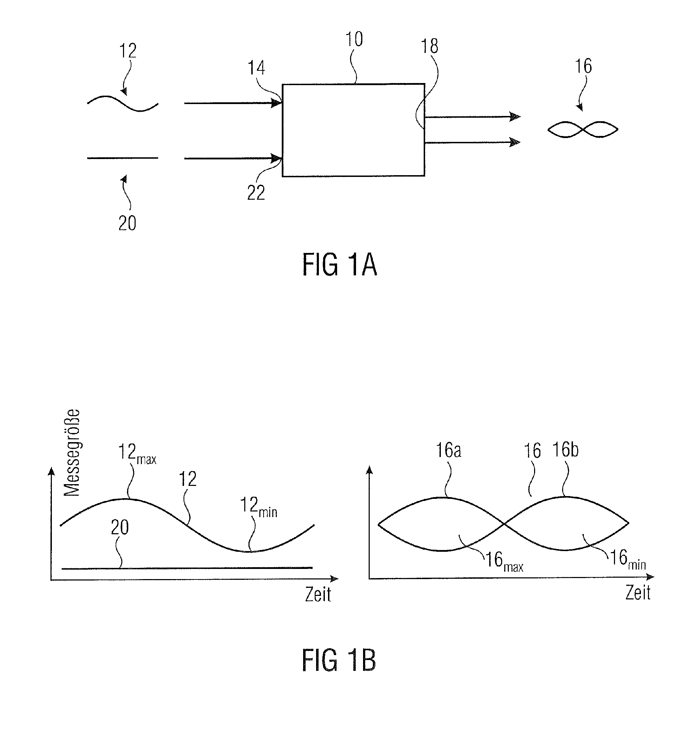

Fig. 1a zeigt einen Eintakt-nach-differentiell-Umsetzer 10, der ausgebildet ist, ein Eintakt-Messsignal 12 als Eingangsgröße über einen ersten Messsignaleingang 14 zu empfangen, dieses in ein differentielles Messsignal 16 zu wandeln und an einem differentiellen Messsignalausgang 18 mit zwei Signalleitern 18a und 18b bereitzustellen. An dieser Stelle sein angemerkt, dass das Eintakt-Messsignal 12 beispielsweise ein Spannungssignal oder Stromsignal ist, welches gegenüber einem Referenzsignal 20 anliegt. Das Referenzsignal 20 kann beispielsweise ein Massesignal sein, welches über einen Referenzsignaleingang 22 des Eintakt-nach-differentiell-Umsetzers empfangbar ist. Die einzelnen Signale (Eintakt-Messsignal 12, Referenzsignal 20 und differentielles Messsignal 16) werden Bezug nehmend auf Fig. 1b näher erläutert.

Fig. 1b zeigt zwei über die Zeit aufgetragene Diagramme, wobei das erste Diagramm das Eintakt-Messsignal 12 gegenüber dem konstanten Referenzsignal 20 darstellt und wobei das zweite Diagramm das resultierende differentielle Messsignal 16 illustriert. Für die beiden Diagramme stellt die jeweilige Messgröße beispielsweise einen Strom oder eine Spannung dar.

In dem ersten Diagramm ist die Differenz zwischen dem Eintakt-Messsignal 12 und dem Referenzsignal 20 die eigentliche Signalinformation. Das Eintakt-Messsignal 12 weist eine Sinusform auf und hat zumindest ein lokales Maximum 12ₘₐₓ und ein lokales Minimum 12_{min.} Durch die oben dargestellten Eintakt-nach-differentiell-Umsetzer 10 wird das Eintakt-Messsignal 12 in ein differentielles Messsignal 16 überführt, welches zwei Signalanteile 16a und 16b umfasst, die jeweils über einen separaten Signalleiter 18a bzw. 18b des differentiellen Messsignalausgangs 18 übertragen werden. Bei der Wandlung der zwei Signalformen erfolgt einerseits eine direkte Weiterleitung des Eintakt-Messsignals 12 an den ersten Signalleiter 18a und andererseits eine Invertierung desselben und Weiterleitung an den zweiten Signalleiter 18b, wobei hier eine Gleichtaktunterdrückung durchgeführt wird.

Die eigentliche Signalinformation hierbei stellt die Differenz zwischen den einzelnen Signalanteilen 16a und 16b dar, die typischerweise im Vergleich zu dem ursprünglichen Eintakt-Messsignal 12 doppelt so groß ist. Das differentielle Messsignal 16 weist ebenfalls ein lokales Maximum 16ₘₐₓ auf, wenn der Signalanteil 16a größer ist als der Signalanteil 16b (16a - 16b > 0) und ein lokales Minimum 16ₘᵢₙ, wenn der Signalanteil 16b größer ist als der Signalanteil 16a (16a - 16b < 0). Die Lage der lokalen Maxima 16ₘₐₓ und Minima 16ₘᵢₙ entspricht auf der Zeitachse der Lage der lokalen Maxima 12ₘₐₓ und Minima 12ₘᵢₙ des Eintakt-Messsignals 12. Wie anhand des zweiten Diagramms zu erkennen ist, sind die Signalanteile 16a und 16b, die beide in einem separaten Signalleiter 18a bzw. 18b übertragen werden, symmetrisch zueinander. Die Symmetrie der beiden Signalanteile 16a und 16b ergibt sich dadurch, dass durch den Eintakt-nach-differentiell-Wandler 10 Gleichtaktanteile des Eintakt-Messsignals 12 bei der Umwandlung minimiert bzw. eliminiert werden. Eine derartige Signalübertragung ist sehr störungstolerant, da sich Störungen von extern in den beiden Signalleitern 18a und 18b nahezu aufheben. Hintergrund ist, dass eine Störung, die auf beide Signalanteile 16a und 16b wirkt, zwar die einzelnen Signalanteile 16a bzw. 16b und damit den Mittelwert verschiebt, nicht aber die Differenz zwischen den zwei Signalanteilen 16a und 16b.

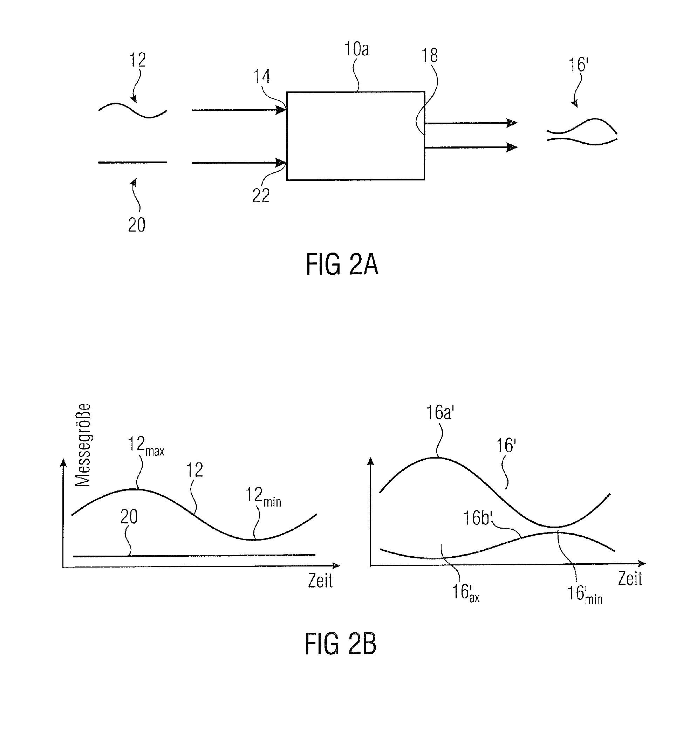

Fig. 2a zeigt eine weitere Vorrichtung zur Eintakt-nach-differentiell-Umwandlung, die einen differentiellen Verstärker 10a, wie z.B. einen Operationsverstärker, aufweist. Der differentielle Verstärker 10a weist einen ersten Messsignaleingang 14 zum Empfangen des Eintakt-Messsignals 12 auf, der gegenüber einer konstanten Referenzgröße 20 an dem Referenzsignaleingang 22 anliegt. Somit wird das Eintakt-Messsignal 12 zusammen mit dem Referenzsignal 20 als differentielles Signal verarbeitet.

Fig. 2b zeigt wiederum in einem ersten Diagramm das Eintakt-Messsignal 12 zusammen mit dem konstanten Referenzsignal 20 aufgetragen über die Zeit. Analog zur Fig. 1b weist das Eintakt-Messsignal 12 das lokale Maximum 12ₘₐₓ und das lokale Minimum 12ₘᵢₙ auf. Der differentielle Verstärker 10a ist dazu ausgebildet, die Differenz zwischen den zwei Signalen 12 und 20 an den Eingängen 14 und 22 zu verstärken, wobei der Referenzsignaleingang 22 hier invertierend ist. Also wird von dem differentiellen Verstärker 10a an dem differentiellen Ausgang 18 ein differentielles Messsignal 16', das das gewünschte Gegentaktsignal aufweist, bereitgestellt.

Da das differentielle Signal 16' jedoch auch das unerwünschte Gleichtaktsignal aufweist, ist dieses, wie in dem zweiten Diagramm dargestellt, nicht symmetrisch. Deshalb kann eine Gleichtaktunterdrückung implementiert sein, die ausgebildet ist das Gleichtaktsignal (vgl. Referenzsignal 20) zu unterdrücken. Das differentielle Messsignal 16' weist wiederum den ersten Signalanteil 16a' und den zweiten Signalanteil 16b' auf, wobei die eigentliche Signalinformation in der Differenz zwischen den zwei Signalanteilen 16a' und 16b' als absolute Größe (d.h. 16a' > 16b', wenn 12 > 20) beinhaltet ist. Somit ist die Differenz zwischen den zwei Signalanteilen 16a' und 16b' maximale zu dem Zeitpunkt, zu welchem bei dem Eintakt-Messsignal 12 das lokale Maximum 12ₘₐₓ vorliegt, und minimal zu dem Zeitpunkt, zu welchem bei dem Eintakt-Messsignal 12 das lokale Minimum 12ₘᵢₙ vorliegt. Diese zwei lokalen Maxima bzw. Minima in dem differentiellen Messsignal 16' sind mit dem Bezugszeichen 16ₘₐₓ' und 16ₘᵢₙ' gekennzeichnet. Bei invertierten Polaritäten der Eingangssignale (12 < 20, nicht dargestellt) wäre die Polarität des differentiellen Signals 16' auch invertiert (d.h. 16a' < 16b').

Die zwei in Fig. 1a und 2a dargestellten Vorrichtungen 10 und 10a zur Eintakt-nach-differentiell-Umsetzung werden typischerweise pro Sensor einmal benötigt, was einerseits die Stromaufnahme und andererseits den Flächenbedarf der Schaltung erhöht. Deshalb werden im Folgenden Vorrichtungen diskutiert, die die gleiche Funktionalität bei reduziertem Strombedarf und Flächenbedarf ermöglichen.

Hierbei wird davon ausgegangen, dass es sich bei den zu übertragenden Eintakt-Messsignalen um unipolare Impulssignale, also um Signale, die nur über eine kurze Zeitdauer (z.B. < 200 ns bei einer Frequenz von 10 Hz) auftreten und hierbei nur eine positive oder eine negative Signaländerung bzw. eine Signaländerung mit nur einer Polarität aufweisen, handelt. Derartige unipolare Impulssignale sind typisch für die betrachteten Anwendungen, nämlich Strahlungssensoren für Positronen-Emissions-Tomographie-Systeme (PET) bzw. für Einzelphotonen-Emissions-Computertomographie-Systeme (SPECT).

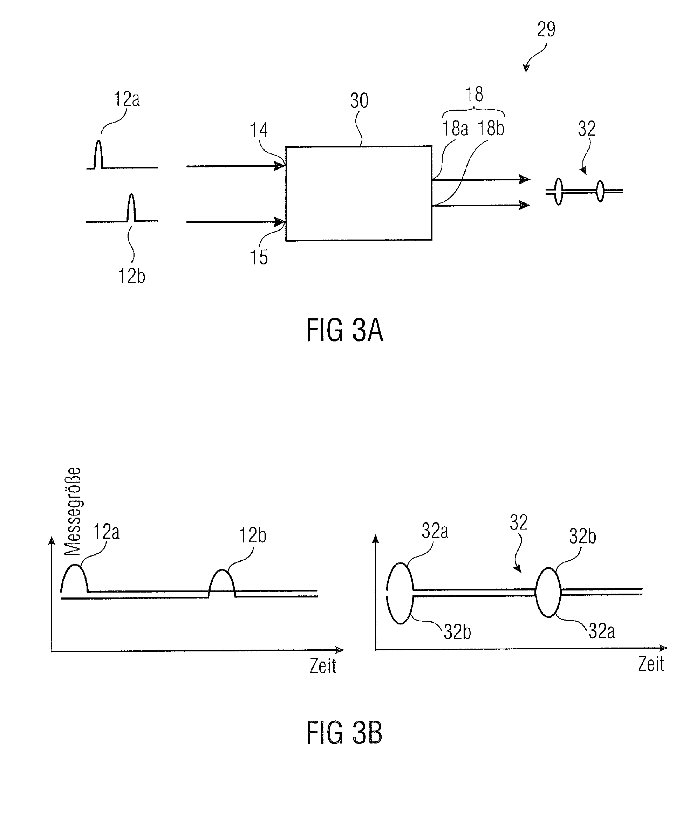

Fig. 3a zeigt eine Übertragungsvorrichtung 29 mit einem Signalumsetzer 30, der einen ersten Messsignaleingang 14, einen zweiten (invertierten) Messsignaleingang 15 und einen differentiellen Messsignalausgang 18 mit zwei Signalleiteranschlüssen 18a und 18b umfasst.

Über den ersten Messsignaleingang 14 ist ein erstes Eintakt-Messsignal 12a und über den zweiten Messsignaleingang 15 ein zweites Eintakt-Messsignal 12b empfangbar. Die zwei empfangenen Eintakt-Messsignale 12a und 12b sind in Fig. 3b in einem ersten Diagramm (aufgetragen über die Zeit) dargestellt. Wie zu erkennen ist, treten die zwei Eintakt-Messsignale 12a und 12b zu unterschiedlichen Zeitpunkten auf und haben jeweils eine kurze Zeitdauer (Impulscharakter). Dies führt dazu, dass die Wahrscheinlichkeit des Empfangens von zwei Eintakt-Messsignalen 12a und 12b zu demselben Zeitpunkt (also infolge von zwei unabhängigen Ereignissen in zwei Sensoren) gering ist. Das erste Diagramm zeigt weiter, dass die zwei Eintakt-Messsignale 12a und 12b unipolar sind, da jedes der Eintakt-Messsignale 12a und 12b (bei Detektion einer Messgröße) von der Basislinie nur in eine Richtung ausgesteuert wird. Diese Basislinien bzw. das Grund-Signalniveau ist konstant und resultiert beispielsweise aus dem Grund-/Ruhe-Sensorstrom her, während die Detektion der jeweiligen Messgröße (Strahlungsereignis) in einem lokalen Maximum gegenüber der Basislinie resultiert. Aus einem Strahlungsereignis kann auch ein gegenüber dem Grund-Signalniveau negatives Eintakt-Messsignal 12a bzw. 12b, also ein lokales Minimum, resultieren, sodass die Polarität des differentiellen Messsignals 32 folglich auch invertiert ist (d.h. 16a' < 16b'). Es sei angemerkt, dass die Höhe des Grundsensorstrom-Niveaus der einzelnen Sensorelemente leicht variieren kann.

Der Signalumsetzer 30 ist ausgebildet, die zwei Eintakt-Messsignale 12a und 12b in differentielle Messsignale zu wandeln, zu kombinieren und an dem differentiellen Messsignalausgang 18 als kombiniertes differentielles Messsignal 32 bereitzustellen, um so eine Bündelung der zwei Eintakt-Messsignalen 12a und 12b zu einem Übertragungskanal zu erreichen. Bei Umwandlung der Eintakt-Messsignale 12a und 12b wird aufgrund des unipolaren Charakters derselben nur der halbe differentielle Signalbereich ausgenutzt. Diese Eigenschaft kann dazu genutzt werden, um bei dem Kombinieren der zwei Eintakt-Messsignale 12a und 12b die Zuordenbarkeit der einzelnen differentiellen Anteile zu den jeweiligen Eintakt-Messsignalen 12a und 12b beizubehalten. Hierzu kann beispielsweise das zweite Eintakt-Messsignal 12b invertiert werden, so dass sich die zwei Eintakt-Messsignale 12a und 12b durch Ihre Polarität unterscheiden.

Dieses Prinzip wird bei Betrachtung des zweiten Diagramms aus Fig. 3b, welches das differentielle Messsignal 32 mit seinen zwei Signalanteilen 32a und 32b darstellt, deutlich. Das kombinierte differentielle Messsignal 32 umfasst die Eintakt-Messsignale 12a und 12b in differentieller Form, also als Differenz der absoluten Beträge zwischen den zwei Signalanteilen 32a und 32b, wobei die Differenz zwischen den zwei Signalanteilen 32a und 32b Maxima zu dem Zeitpunkt des lokalen Maximums des ersten Eintakt-Messsignals 12a und zu dem Zeitpunkt des Maximums des zweiten Eintakt-Messsignals 12b aufweist. Bei separierter Betrachtung der zwei Signalanteile 32a bzw. 32b ist zu erkennen, dass der erste Signalanteil 32a ein lokales Maximum zu dem Zeitpunkt des Maximums des ersten Eintakt-Messsignals 12a aufweist und ein lokales Minimum zu dem Zeitpunkt des Maximums des zweiten Eintakt-Messsignals 12b. Umgekehrt weist der zweite Signalanteil 32b zu dem Zeitpunkt des Maximums des ersten Eintakt-Messsignals 12a ein lokales Minimum und zu dem Zeitpunkt des lokalen Maximums des zweiten Eintakt-Messsignals 12b ein lokales Maximum auf. Insofern ist durch den absoluten Vergleich der zwei Signalanteile 32a und 32b eine Differenzierung der zwei Eintakt-Messsignale 12a und 12b möglich. In anderen Worten ausgedrückt heißt das, dass ein erstes Eintakt-Messsignal 12a (welches über den ersten Messsignaleingang 14 empfangen ist) in einem differentiellen Messsignal 32 resultiert, bei welchem der erste Signalanteil 32a größer ist als der zweite Signalanteil 32b, während ein zweites Eintakt-Messsignal 12b (welches über den zweiten Messsignaleingang 15 empfangen ist) in ein differentielles Messsignal 32 resultiert, bei welchem der zweite Signalanteil 32b größer ist als der erste Signalanteil 32a. Somit kann aufgrund der Polarität jeder Teil des differentiellen Messsignals 32 (und damit der zu bestimmende Zeitpunkt eines mittels eines an den ersten und zweiten Messsignaleingang 14 und 15 angeschlossenen Sensorelements detektierten Ereignisses) einem Ereignis eindeutig zugeordnet werden.

Beim Vergleich der zwei Diagramme wird deutlich, dass das differentielle Messsignal 32 im Vergleich zu dem ursprünglichen Eintakt-Messsignal 12a bzw. dem Eintakt-Messsignal 12b eine doppelt so hohe Amplitude aufweist, was neben der erhöhten Störsignaltoleranz (aufgrund eines niedriges Signal-Rausch-Verhältnisses) zur besseren Signalqualität beiträgt. Deshalb ist entsprechend weiteren Ausführungsbeispielen der Signalumsetzer 30 bzw. die Übertragungsvorrichtung 29 dazu ausgebildet, das differentielle Messsignal 32 so bereitzustellen, dass der Betrag desselben ein n-faches des Eintakt-Messsignals 12a bzw. des Eintakt-Messsignals 12b beträgt. Dieses Signalamplituden-Verhältnis kann verloren gehen, wenn die zwei Eintakt-Messsignale 12a und 12b zeitgleich ein lokales Maximum bzw. überlappende lokale Maxima infolge eines zeitgleich detektierten Ereignisses ausbilden. Hierdurch würden sich die zwei Signalanteile 32a und 32b teilweise überlagern bzw. auslöschen, was entsprechend weiteren Ausführungsbeispielen dazu führt, dass ein Fehler infolge eines unplausiblen Signals detektierbar ist

Durch die Invertierung des zweiten Messsignaleingangs 15 und die Tatsache, dass die verwendeten Sensorelemente typischerweise eine vergleichbare Basislinie bzw. ein vergleichbares Ruhe-Signalniveau aufweisen, reduzieren sich die Gleichtaktanteile (vgl. Referenzpotenzial 20) der Eintakt-Messsignale 12a und 12b. Hierbei kann es sogar zu einer vollständigen Auslöschung (bzw. Ausmittelung) der Gleichtaktanteile kommen, wenn die Ruhe-Signale gleich sind. Hintergrund hierzu ist, dass das zweite invertierte Eintakt-Messsignal 12b für das erste Eintakt-Messsignal 12a das Referenzsignal darstellt, während das erste Eintakt-Messsignal 12a für das zweite invertierte Eintakt-Messsignal 12b das Referenzsignal darstellt. Da es sich bei beiden Signalen 12a und 12b um gleichartige Signale, die von gleichartigen Bauelementen erzeugt werden, handelt, weisen die beiden Eintakt-Messsignale 12a und 12b typischerweise ein gleiches oder ähnliches temperaturabhängiges Verhalten auf, so dass durch die Invertierung gleichzeitig ein Temperaturkompensation erfolgt.

Im Folgenden werden zwei konkrete Ausführungsbeispiele eines Signalumsetzers beschrieben.

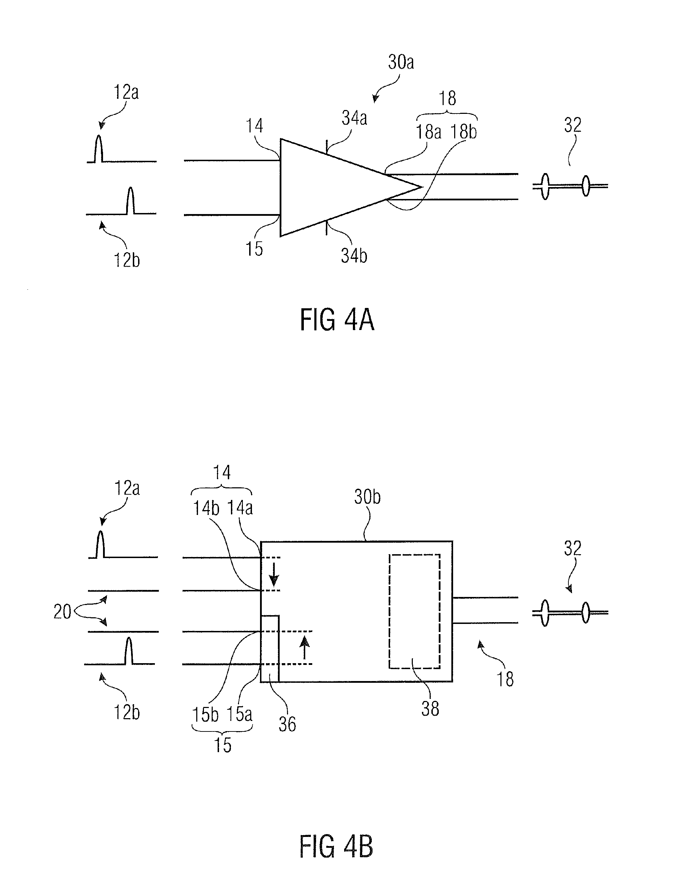

Fig. 4a zeigt einen differentiellen Verstärker bzw. Operationsverstärker 30a, der einen ersten Messsignaleingang 14 und einen zweiten Messsignaleingang 15, der typischerweise invertiert ist, sowie einen differentiellen Messsignalausgang 18 aufweist. Ferner weist der differentielle Verstärker 30a zusätzlich zwei Versorgungsspannungsanschlüsse 34a und 34b auf. Es sei angemerkt, dass hier nur eine minimale Anschlusskonfiguration illustriert ist, auch wenn ein hier beschriebener Operationsverstärker 30a häufig weitere Anschlüsse, z.B. für einen Signal-Offset, aufweisen kann.

Ein derartiger differentielle Verstärker 30a kann als Signalumsetzer 30 fungieren, da dieser, wie oben besprochen ausgebildet ist, Eintakt-Messsignale in differentielle Messsignale umzuwandeln. Um mittels dieses differentiellen Verstärkers 30a die zwei Eintakt-Messsignale 12a und 12b in das kombiniertes differentielles Messsignal 32 zu wandeln, wird das erste Eintakt-Messsignal 12a über den ersten Messsignaleingang 14 und das zweite Eintakt-Messsignal 12b über den zweiten (invertierten) Messsignaleingang 15 eingekoppelt, so dass das differentielle Messsignal 32 über den differentiellen Ausgang 18 ausgebbar ist. Es sei ferner angemerkt, dass über die Spannungsversorgungsanschlüsse 34a und 34b die Versorgungsspannung für den differentiellen Verstärker 30a angeschlossen ist, mittels welcher der Arbeitspunkt durch Variation der Versorgungsspannung eingestellt werden kann. Für den Einsatz eines derartigen differentiellen Verstärkers 30a zur Wandlung von Eintakt-Messsignalen in differentielle Messsignale, ist der differentielle Verstärker 30a typischerweise in eine Schaltungsanordnung eingebettet, die mindestens einen Rückkopplungspfad (nicht dargestellt), mit integriertem Widerstand umfasst. Dieser Rückkopplungspfad ist typischerweise zwischen einem der Signalleiter 18a bzw. 18b und einem der Messsignalanschlüsse 14 und 15 gekoppelt. Entsprechend weiteren Ausführungsbeispielen kann die Schaltungsanordnung auch zwei parallele Rückkopplungspfade, nämlich einen ersten zwischen dem ersten Messsignaleingang 14 und dem ersten Signalleiter 18a und einen zweiten zwischen dem zweiten Messsignaleingang 15 und dem zweiten Signalleiter 18 umfassen.

Fig. 4b zeigt eine weitere Implementierung eines Signalumsetzers 30b, der einen ersten Messsignaleingang 14 und einen zweiten Messsignaleingang 15 sowie einen differentiellen Messsignalausgang 18 aufweist. In diesem Ausführungsbeispiel ist der Messsignaleingang 14 durch einen differentielle Messsignaleingang gebildet, wobei über einen ersten Signalleiter 14a das erste Eintakt-Messsignal 12a gegenüber einem Referenzsignal 20, welches an dem zweiten Signalleiter 14b anliegt, empfangbar ist. Analog hierzu ist der zweite Messsignaleingang 15 durch einen differentiellen Messsignaleingang gebildet, der einen ersten Signalleiter 15, über welchen das zweite Eintakt-Messsignal 12b gegenüber einem Referenzsignal 20, welches an dem zweiten Signalleiter 15b anliegt, empfangbar ist. Es sei ferner angemerkt, dass hierbei der zweite Messsignaleingang 15 typischerweise invertierend ist bzw. einen optionalen Inverter 36 aufweist.

Bei dieser Implementierung wird also, wie oben bereits beschrieben, das Eintakt-Messsignal 12a bzw. das Eintakt-Messsignal 12b als differentielles Signal gegenüber einem Referenzsignal 20 verarbeitet. Das Referenzsignal 20, das für beide differentielle Eingänge 14 und 15 das gleiche sein kann und an dem jeweils zweiten Signalleiter 14b bzw. 15b anliegt, kann beispielsweise ein Massesignal oder ein Mittelwert der zwei Eintaktsignale 12a und 12b sein. Somit kann, wie oben bereits beschrieben, werden. Der erste differentielle Messsignaleingang 14 ist direkt mit dem differentiellen Messsignalausgang 18 gekoppelt, während der zweite Messsignaleingang 15 invertiert an dem differentiellen Messsignalausgang 18 gekoppelt ist. Da wie oben bereits beschrieben bei einer derartigen Verschaltung häufig Gleichtaktanteile auftreten, kann der Signalumsetzer 30b eine optionale Gleichtaktunterdrückungsschaltung 38 aufweisen.

Nachfolgend wird ein Sensorsystem 40 beschrieben, bei dem eine Mehrzahl von den oben beschriebenen Übertragungsvorrichtungen 29 zum Einsatz kommt.

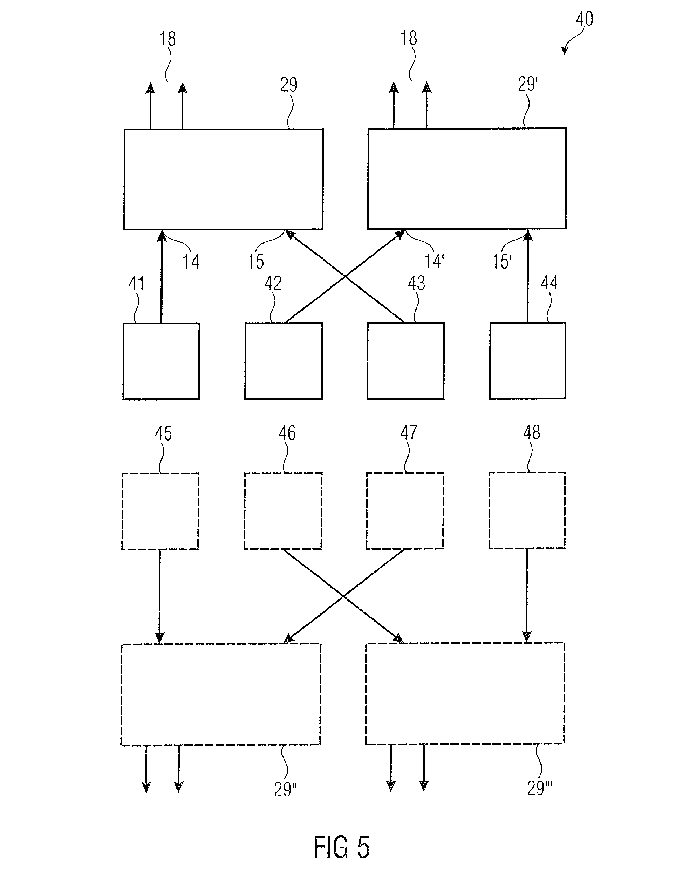

Fig. 5 zeigt eine erste Übertragungsvorrichtungen 29 und eine zweite Übertragungsvorrichtungen 29', die jeweils einen differentiellen Ausgang 18 bzw. 18' sowie zwei Messsignaleingänge 14 und 15 bzw. 14' und 15' aufweisen. Ferner zeigt Fig. 5 vier nebeneinander angeordnete Sensorelemente 41, 42, 43 und 44, wie zum Beispiel Pixel eines Pixelarrays. Hierbei ist das erste Sensorelement 41 an den ersten Messsignaleingang 14 der ersten Übertragungsvorrichtung 29 angeschlossen, während das dritte Sensorelement 43 an den zweiten Signaleingang 15 der ersten Übertragungsvorrichtung angeschlossen ist. Umgekehrt ist das zweite Sensorelement, was zwischen dem ersten Sensorelement 41 und dem dritten Sensorelement 43 liegt, an den ersten Signaleingang 14' der zweiten Übertragungsvorrichtung 29' angeschlossen, so dass Messsignale von zwei benachbarten Sensorelementen mittels unterschiedlichen Übertragungsvorrichtungen 29 bzw. 29' differentiell übertragen werden. Der Vollständigkeit halber sei angemerkt, dass das vierte Sensorelement 44, welches neben dem dritten Sensorelement 43 liegt, an den zweiten Signaleingang 15' der zweiten Übertragungsvorrichtungen 29' gekoppelt ist.

Dieses Prinzip setzt sich in alle vertikale Ausdehnungsrichtungen des Pixelarrays fort, wie anhand der optionalen Sensorelemente 45, 46, 47 und 48 der zweiten Reihe illustriert ist. Diese vier Sensorelemente 45, 46, 47, 48 sind ebenfalls über Kreuz mit den zwei optionalen Übertragungsvorrichtungen 29' und 29" angeschlossen. Der Vorteil bei dieser Art des überkreuzten Anschlusses besteht darin, dass so ein Übersprechen von benachbarten Sensorelementen erfasst werden kann, da diese über separate Übertragungsvorrichtungen 29 bzw. 29' (bzw. 29" und 29"') übertragen werden. Hintergrund hierzu ist, dass zwei Impulssignale von zwei benachbarten Sensoren, die einen auf beide Sensorelemente wirkenden Strahlungsimpuls (zeitgleich) erfassen, sich nicht gegenseitig auslöschen. Insofern entsteht eine verschachtelte Anordnung der einzelnen Sensorelemente 41 bis 48. An dieser Stelle sei angemerkt, dass diese Darstellung nur exemplarisch ist und dass auch der überkreuzte Anschluss in veränderter Form realisiert sein kann.

Weitere Ausführungsbeispiele beziehen sich auf eine Auswertevorrichtung, die dazu ausgebildet ist, das differentiell übertragene Messsignal von zwei Sensorelementen, die typischerweise Eintakt-Messsignale ausgeben, zu empfangen, und die Anteile in dem differentiellen Messsignal 32 den einzelnen Eintakt-Messsignalen bzw. Sensorelementen zuzuordnen. Diese Zuordnung erfolgt, wie oben beschrieben, durch Vergleich der absoluten Signalanteile 32a und 32b miteinander.

An dieser Stelle sei angemerkt, dass mit den oben beschriebenen Vorrichtungen auch statische Signale erfasst, gewandelt und übermittelt werden können, so dass die Signalform nicht auf Impulssignale, Sinussignale oder allgemein auf Wechselsignale eingeschränkt ist. Der statische Anteil kann, wenn nötig, in Abhängigkeit von der eingesetzten Schaltung verändert werden.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block oder ein Bauelement einer Vorrichtung auch als ein entsprechender Verfahrensschritt oder als ein Merkmal eines Verfahrensschritts zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

## Patentansprüche

1. Sensor-System (40) mit folgenden Merkmalen:
einer Vielzahl von Sensorelementen (41, 42, 43, 44, 45, 46, 47, 48), die jeweils impulsförmige Eintakt-Messsignale liefern; und
mindestens zwei Eintakt-nach-differenziell-Wandlern (29, 29', 29", 29"'), die jeweils aufweisen:
- einen ersten Messsignaleingang (14) zum Empfangen eines ersten Eintakt-Messsignals (12a) und einen zweiten Messsignaleingang (15) zum Empfangen eines zweiten Eintakt-Messsignals (12b);
- einen differenziellen Messsignalausgang (18); und
- einen Signalumsetzer (30, 30a, 30b), der ausgebildet ist, die beiden Eintakt-Messsignale (12a, 12b) in ein differenzielles Messsignal (32) umzusetzen,
wobei das differenzielle Messsignal (32) einen ersten (16a, 16a', 32a) und einen zweiten (16b, 16b', 32b) differenziellen Anteil als zwei Ausgangssignale auf zwei Signalleitungen umfasst, und der erste Anteil bzw. das erste Ausgangssignal (16a, 16a', 32a) aus der Differenz der beiden Eingangssignale, und der zweite Anteil bzw. das zweite Ausgangssignal (16b, 16b', 32b) aus der invertierten Differenz der beiden Eingangssignale abgeleitet wird,
wobei ein erstes Sensorelement (41) mit einem ersten der zwei Messsignaleingänge (14, 15) des ersten Eintakt-nach-differenziell-Wandlers (29, 29', 29", 29"') und ein zweites Sensorelement (42) mit einem ersten der zwei Messsignaleingänge (14', 15') des zweiten Eintakt-nach-differenziell-Wandlers (29, 29', 29", 29"') verbunden sind, und
wobei ein drittes Sensorelement (43), welches nicht-angrenzend an das erste Sensorelement (41) angeordnet ist, mit einem zweiten der zwei Messsignaleingänge (14, 15) des ersten Eintakt-nach-differenziell-Wandlers (29, 29', 29", 29'"), verbunden ist.

2. Sensor-System (40) gemäß Anspruch 1, wobei der Signalumsetzer (30, 30a) eine Schaltungsanordnung ist, die zumindest einen differenziellen Verstärker (30a) umfasst.

3. Sensor-System (40) gemäß Anspruch 2, wobei der differenziellen Verstärker (30a) einen nicht-invertierten Eingang (14), der mit dem ersten Messsignaleingang (14) gekoppelt ist, einen invertierten Eingang (15), der mit dem zweiten Messsignaleingang (15) gekoppelt ist, und einen differenziellen Ausgang (18) aufweist, der den differenziellen Messsignalausgang (18) bildet.

4. Sensor-System (40) gemäß Anspruch 3, wobei die Schaltungsanordnung zumindest einen Rückkopplungspfad umfasst, der einen ersten oder zweiten Anschluss (18a, 18b) des differenziellen Messsignalausgangs (18) über einen Widerstand mit dem nicht-invertierten oder invertierten Eingang (14, 15) rückkoppelt.

5. Sensor-System (40) gemäß Anspruch 1, wobei der Signalumsetzer (30, 30b) einen ersten Messsignaleingang (14), der nicht-invertierten ist, und einen zweiten Messsignaleingang (15), der invertierten ist, aufweist und ausgebildet ist ein erstes differenzielles Signal zwischen dem ersten Eintakt-Messsignal (12a) und einem ersten Referenzsignal (20) und ein zweites differenzielles Signal zwischen dem zweiten Eintakt-Messsignal (12b) und einem zweiten Referenzsignal (20) zu bilden und das erste und zweite differenzielle Signal zu kombinieren.

6. Sensor-System (40) gemäß Anspruch 5, wobei das erste und zweite Referenzsignal ein Massesignal oder ein Mittelwertsignal zwischen dem ersten und zweiten Eintakt-Messsignal (12a, 12b) ist.

7. Sensor-System (40) gemäß Anspruch 5 oder 6, wobei der Signalumsetzer (30, 30a, 30b) eine Gleichtaktunterdrückungsschaltung (38) aufweist.

8. Sensor-System (40) gemäß einem der Ansprüche 1 bis 7, wobei der Signalumsetzer (30, 30a, 30b) ausgebildet ist, einen Gleichtaktanteil des ersten Eintakt-Messsignals (12a) und des zweiten Eintakt-Messsignals (12b) auszugleichen.

9. Sensor-System (40) gemäß einem der Ansprüche 1 bis 8, wobei der erste Messsignaleingang (14) und der zweite Messsignaleingang (15) so miteinander verschaltet sind, dass das erste Eintakt-Messsignal (12) ein Referenzsignal (20) für das zweite Eintakt-Messsignal (12b) darstellt und umgekehrt.

10. Sensor-System (40) gemäß Anspruch 9, wobei der erste Messsignaleingang (14) und der zweite Messsignaleingang (15) zueinander invertiert sind, so dass ein Gleichtaktanteil des ersten Eintakt-Messsignals (12a), das unipolar gegenüber einer ersten Bezugsgröße ist, und des zweiten Eintakt-Messsignals (12b), das unipolar gegenüber einer zweiten Bezugsgröße ist, reduziert wird.

11. Sensor-System (40) gemäß einem der Ansprüche 8 bis 10, wobei der Signalumsetzer (30, 30a, 30b) ausgebildet ist, das kombinierte differenzielle Messsignal (32), das bipolar gegenüber einem Mittelwert ist, so bereitzustellen,
dass ein Betrag des ersten Eintakt-Messsignals (12a) gegenüber der ersten Bezugsgröße und ein Betrag des zweiten Eintakt-Messsignals (12b) gegenüber der zweiten Bezugsgröße einem 1/n-fachen eines Betrag zwischen einem ersten Signalanteil (32a) des differenziellen Messsignals (32) und einem zweiten Signalanteil (32b) des differenziellen Messsignals (32) mit n≥1 entspricht.

12. Sensor-System (40) gemäß Anspruch 11, wobei der Signalumsetzer (30, 30a, 30b) ausgebildet ist, das kombinierte differenzielle Messsignal (32) so bereitzustellen, dass der erste Signalanteil (32a) des differenziellen Messsignals (32) größer als der zweite Signalanteil (32b) des differenziellen Messsignals ist, wenn das erste Eintakt-Messsignal (12a) empfangen ist, und dass der zweite Signalanteil des differenziellen Messsignals (32) größer als der erste Signalanteil (32a) des differenziellen Messsignals (32) ist, wenn das zweite Eintakt-Messsignal (12b) empfangen ist.

13. Sensor-System (40) gemäß Anspruch 11 oder 12, wobei der Signalumsetzer (30, 30a, 30b) ausgebildet ist, das kombinierte differenzielle Messsignal (32) so bereitzustellen,
dass der Betrag des ersten Eintakt-Messsignals (12a) gegenüber der ersten Bezugsgröße oder der Betrag des zweiten Eintakt-Messsignals (12b) gegenüber der zweiten Bezugsgröße von dem 1/n-fachen des Betrags zwischen dem ersten Signalanteil und dem zweiten Signalanteil abweicht, wenn das erste Eintakt-Messsignal (12a) und das zweite Eintakt-Messsignal (12b) sich zeitlich überlappen.

14. Sensor-System (40) gemäß einem der Ansprüche 1 bis 13, wobei die Vielzahl der Sensorelemente (41, 42, 43, 44, 45, 46, 47, 48) Pixel eines Pixelsensors oder Pixel eines Pixelsensors für eine Positronen-Emissions-Tomographie sind.

15. Verwendung eines Eintakt-nach-differenziell-Wandlers zur Übertragung von zwei elektrischen impulsförmigen Eintakt-Messsignalen, wobei im Eintakt-nach-differenziell-Wandler das erste Eintakt-Messsignal (12a) über einen ersten Messsignaleingang (14) und das zweite Eintakt-Messsignal (12b) über einen zweiten Messsignaleingang (15) empfangen wird; und
wobei im Eintakt-nach-differenziell-Wandler die beiden Eintakt-Messsignale (12a, 12b) in ein differenzielles Messsignal (16, 32) umgesetzt werden, so dass das differenzielle Messsignal (16, 32) einen ersten (16a, 16a', 32a) und einen zweiten (16b, 16b', 32b) differenziellen Anteil als zwei Ausgangssignale auf zwei Signalleitungen umfasst, und der erste Anteil bzw. das erste Ausgangssignal (16a, 16a', 32a) aus der Differenz der beiden Eingangssignale, und der zweite Anteil bzw. das zweite Ausgangssignal (16b, 16b', 32b) aus der invertierten Differenz der beiden Eingangssignale abgeleitet wird.

16. Verfahren zur Übertragung von zwei elektrischen impulsförmigen Eintakt-Messsignalen (12a, 12b), mit folgenden Schritten:
Empfangen des ersten Eintakt-Messsignals (12a) über einen ersten Messsignaleingang (14) und des zweiten Eintakt-Messsignals (12b) über einen zweiten Messsignaleingang (15) eines Eintakt-nach-differenziell-Wandlers; und
Umwandeln der beiden Eintakt-Messsignale (12a, 12b) im Eintakt-nach-differenziell-Wandler in ein differenzielles Messsignal (16, 32), so dass das differenzielle Messsignal (16, 32) einen ersten (16a, 16a', 32a) und einen zweiten (16b, 16b', 32b) differenziellen Anteil als zwei Ausgangssignale auf zwei Signalleitungen umfasst, und der erste Anteil bzw. das erste Ausgangssignal (16a, 16a', 32a) aus der Differenz der beiden Eingangssignale, und der zweite Anteil bzw. das zweite Ausgangssignal (16b, 16b', 32b) aus der invertierten Differenz der beiden Eingangssignale abgeleitet wird.
